# EUROPÄISCHE PATENTANMELDUNG

(11) **EP 0 568 885 A2**
(43) Veröffentlichungstag der Anmeldung: **10.11.1993**
(21) Anmeldenummer: 93106686.4
(22) Anmeldetag: 24.04.1993
(51) Int. Cl.: B03B 5/48

(54) **Auswaschvorrichtung, insbesondere für Restbeton-Wiederaufbereitungsanlagen**

(30) Priorität: 08.05.1992 DE 4215174
(71) Anmelder: Bozenhardt, Friedrich, D-72666 Neckartailfingen (DE)
(72) Erfinder: Bozenhardt, Friedrich, D-72666 Neckartailfingen (DE)
(74) Vertreter: Möbus, Rudolf, Dipl.-Ing.

(57) **Zusammenfassung**

Eine Auswaschvorrichtung, insbesondere für Restbeton-Wiederaufbereitungsanlagen mit einem in einem Trog (11) angeordneten Rotor (13), der zur Vermeidung von Abdichtungsproblemen bei Verwendung einer Rotorwelle an mindestens einer Stirnseite einen Ring (17) aufweist, der in seinem oberen Bereich an Führungslementen (22 - 25) an der Trogwandung (21) drehbar gelagert und von einer exzentrischen Antriebsvorrichtung (18) beaufschlagt ist.

## Beschreibung

Die Erfindung betrifft eine Auswaschvorrichtung, insbesondere für Restbeton-Wiederaufbereitungsanlagen mit einem in einem Trog angeordneten Rotor in Form einer Förderschnecke.

Solche Auswaschvorrichtungen sind insbesondere für die tägliche Reinigung von Frischbeton-Fahrmischern bekannt. Die Betonreste aus dem Fahrzeug gelangen zusammen mit Spülwasser in die Auswaschvorrichtung und werden dort mittels eines als Förderschnecke ausgebildeten Rotors zum Trogende hin weiterbefördert und der Wiederaufbereitung zugeführt. Bei den bislang bekannten Auswaschvorrichtungen ist der Rotor auf einer sich über die gesamte Länge des Troges erstreckenden Welle gelagert, wobei diese Welle in Kontakt mit dem Auswaschgut gelangt. Dadurch ergeben sich bei den bekannten Vorrichtungen stets Probleme mit der Abdichtung der Welle. Der Betonschlamm verschleißt herkömmliche Wellenabdichtungen in kurzer Zeit, so daß häufig Wellen- und Lagerschäden auftreten.

Der Erfindung liegt daher die Aufgabe zugrunde, eine Auswaschvorrichtung zu schaffen, bei der das Problem der Abdichtung der Rotorwelle entfällt.

Die Aufgabe wird mit einer Auswaschvorrichtung der eingangs genannten Art erfindungsgemäß dadurch gelöst, daß der Rotor an mindestens einer Stirnseite einen Ring aufweist, der in seinem oberen Bereich an Führungselementen an der Trogwandung drehbar gelagert und von einer exzentrischen Antriebsvorrichtung beaufschlagt ist. Bei der erfindungsgemäßen Auswaschvorrichtung wird also vollständig auf eine Rotorwelle verzichtet.

Stattdessen wird der Rotor an einem Ring, der in seinem oberen Bereich, d. h. oberhalb des Betonschlammes, an Führungselementen drehbar gelagert ist, angetrieben. Der Antrieb erfolgt dabei exzentrisch, so daß auch das Vorsehen einer Antriebswelle im Bereich des Betonschlammes entfällt. Zweckmäßigerweise ist dabei die Antriebsrichtung oberhalb des Auswaschgutes an der Trogwandung angeordnet. Auf diese Weise entfallen bei der erfindungsgemäßen Vorrichtung die Dichtungs- und Verschleißprobleme, die sich insbesondere bei Auswaschvorrichtungen für Beton-Wiederaufbereitungsanlagen ergeben, vollständig.

Die exzentrische Antriebsvorrichtung kann vorteilhafterweise ein von einem Motor angetriebenes Zahnritzel sein, das mit einem am Umfang des Ringes angeordneten Zahnsteg in Eingriff steht. Der Zahnsteg kann dabei aus drehbar gelagerten, in axialer Richtung am Ring angeordneten Bolzen gebildet sein. Der konstruktive Aufwand einer solchen Antriebsvorrichtung ist äußerst gering. Auch die Motorkraft, die angewendet werden muß, um den Ring des Rotors zu bewegen, ist nicht höher als beim Antrieb des Rotors über eine Welle.

Die Führungselemente, die den Rotor-Ring an der Trogwandung haltern, können zweckmäßigerweise Paare von Führungsrollen sein, wobei jeweils eine Rolle auf der Innenseite und eine Rolle auf der Außenseite des Ringes angreift. Solche Paare von Führungsrollen können an mehreren Stellen im oberen Bereich des Ringes vorgesehen sein. Auf diese Weise läßt sich eine sichere Lagerung des Rotors gewährleisten. Auch auf der der exzentrischen Antriebsvorrichtung gegenüberliegenden Ringseite kann eine Führungsrolle zur Verbesserung der Führung des Ringes angeordnet sein. Diese zusätzliche Führungsrolle sorgt dafür, daß die in radialer Richtung auf den Ring wirkenden Kräfte der Antriebsvorrichtung aufgefangen werden.

Nachfolgend wird ein Ausführungsbeispiel einer erfindungsgemäß ausgebildeten Auswaschvorrichtung anhand der beiliegenden Zeichnung näher erläutert.

Im einzelnen zeigen:
- Fig. 1: eine Seitenansicht einer Auswaschvorrichtung einer Restbeton-Wiederaufbereitungsanlage;
- Fig. 2: einen Querschnitt entlang der Linie II-II in Fig. 1;
- Fig. 3: einen Schnitt entlang der Linie III-III in Fig. 2 durch eine Antriebsvorrichtung des Rotors der Auswaschvorrichtung.

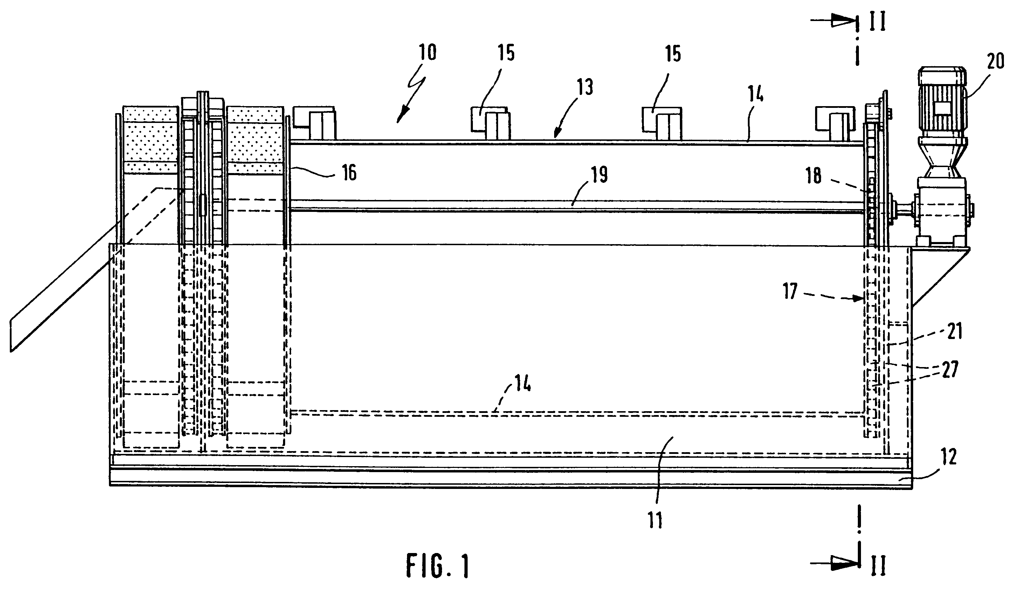

Fig. 1 zeigt eine Auswaschvorrichtung 10 mit einem Trog 11 mit im wesentlichen halbkreisförmigen Querschnitt, der auf einem Rahmen 12 angeordnet ist. Im Trog 11 ist ein Rotor 13 drehbar angeordnet, von dem eine Längsstrebe 14 sowie darauf angeordnete Schaber 15 dargestellt sind. Die Längsstreben 14, die über den gesamten Umfang des Rotors 13 verteilt angeordnet sind, dienen der Halterung einer nicht dargestellten Wendel einer Förderschnecke. Die Schaber 15 gleiten an der Innenwand des Troges 11 entlang und halten diese dadurch sauber. Die Längsstreben 14 des Rotors 13 sind auf einer Seite in einer Stirnwandung 16 des Rotors 10 und auf der anderen Seite in einem Ring 17 verankert. Der Ring 17 dient gleichzeitig dem Antrieb des Rotors 13. Hierzu greift ein Ritzel 18, das auf einer sich über die gesamte Länge des Troges 11 erstreckenden Welle 19 gelagert und von einem Antriebsmotor 20 angetrieben ist, am Ring 17 an. Die Welle 19 ist oberhalb des Troges 11 geführt, so daß kein Betonschlamm mit ihr in Berührung kommen kann.

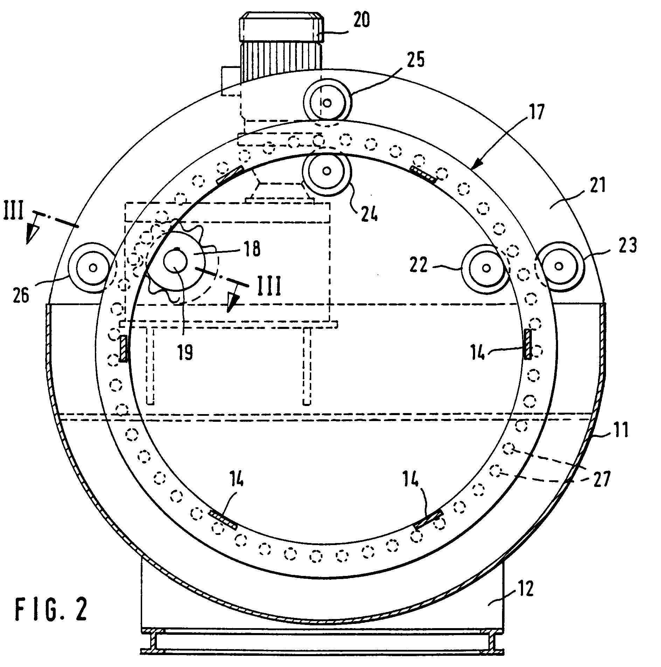

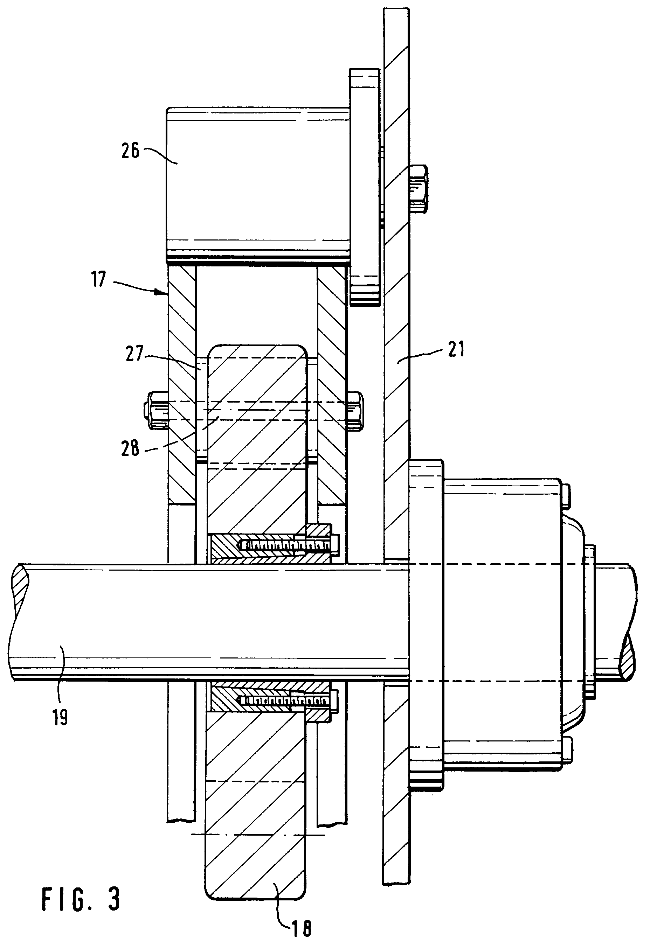

Die Einzelheiten des Antriebs des Ringes 17 und seiner Halterung an einer Seitenwandung 21 des Troges 11 sind in den Fig. 2 und 3 verdeutlicht.

In Fig. 2 ist der halbkreisförmige Querschnitt des Troges 17 zu erkennen, wobei die Seitenwände jedoch weiter als ein Halbkreisbogen nach oben gezogen sind, wodurch sich ein größeres Trogvolumen als bei bekannten Anlagen ergibt, was durch die neue, wellenfreie Lagerung des Rotors 13 ermöglicht wird. Der Ring 17 des Rotors 13 ist an einer Stirnwandung 21 des Troges 11 mittels Paaren von Führungsrollen 22/23, 24/25 sowie durch das Zahnritzel 18 und eine mit diesem zusammenwirkenden Führungsrolle 26 gehaltert. Die Führungsrollen 22 - 26 sind dabei drehbar gelagert an der Stirnwandung 21 angeordnet und weisen eine Nut auf, in der der Ring 17 geführt ist. Am Ring 17 sind außerdem die Längsstreben 14 des Rotors 13 befestigt. Der Antrieb des Rotors 13 erfolgt über Bolzen 27, die drehbar gelagert über den gesamten Umfang verteilt am Ring 17 angeordnet sind, mit denen das Ritzel 18 in Eingriff steht. Die Bolzen 27 erstrecken sich dabei parallel zur Richtung der Drehachse des Rotors 13, wie aus Fig. 1 ersichtlich ist. Das Zahnritzel 18 wird von der Welle 19 mittels eines Antriebsmotors 20 außerhalb des Troges 11 angetrieben.

Fig. 3 verdeutlicht den Antrieb des Ringes 17 über das Zahnritzel 18, das von der Welle 19 angetrieben ist. Es ist die axiale Ausrichtung eines Bolzen 27, der an einer Welle 28 drehbar im Ring 17 angeordnet ist und an dem das Zahnritzel 18 angreift, zu erkennen. Auf seiner in radialer Richtung äußeren Seite wird der Ring 17 von der Führungsrolle 26 geführt, die drehbar an der Strinwandung 21 des Troges 11 angeordnet ist. Die Rolle 26 bietet somit ein Wiederlager zum Ritzel 18 und dient der radialen und tangentialen Führung des Ringes 17.

## Patentansprüche

1. Auswaschvorrichtung, insbesondere für Restbeton-Wiederaufbereitungsanlagen, mit einem in einem Trog angeordneten Rotor in Form einer Förderschnecke, dadurch gekennzeichnet, daß der Rotor (13) an mindestens einer Stirnseite einen Ring (17) aufweist, der in seinem oberen Bereich an Führungselementen (22 - 26) an der Trogwandung (21) drehbar gelagert und von einer exzentrischen Antriebsvorrichtung (18) beaufschlagt ist.

2. Auswaschvorrichtung nach Anspruch 1, dadurch gekennzeichnet, daß die exzentrische Antriebsvorrichtung (18) außerhalb des Auswaschgutes an der Trogwandung angeordnet ist.

3. Auswaschvorrichtung nach Anspruch 1 und 2, dadurch gekennzeichnet, daß die exzentrische Antriebsvorrichtung (18) mindestens ein von einem Motor (20) angetriebenes Zahnritzel (18) ist, das mit einem am Umfang des Ringes (17) angeordneten Zahnsteg in Eingriff steht.

4. Auswaschvorrichtung nach Anspruch 3, dadurch gekennzeichnet, daß der Zahnsteg aus drehbar gelagerten, in axialer Richtung am Ring (17) angeordneten Bolzen (27) gebildet ist.

5. Auswaschvorrichtung nach einem der Ansprüche 1 bis 4, dadurch gekennzeichnet, daß die Führungselemente (22 - 26) Paare von Führungsrollen (22/23, 24/25) sind, wobei jeweils eine Rolle (22, 24) auf der Innenseite und eine Rolle (23, 25) auf der Außenseite des Ringes (17) angreift.

6. Auswaschvorrichtung nach einem der Ansprüche 1 bis 5, dadurch gekennzeichnet, daß auf der der exzentrischen Antriebsvorrichtung (18) gegenüberliegenden Ringseite eine Führungsrolle (26) zur verbesserten Führung des Ringes (17) angeordnet ist.
